(19) Europäisches Patentamt
European Patent Office
Office européen des brevets

(11) Veröffentlichungsnummer: **0 588 105 A1**

(12) **EUROPÄISCHE PATENTANMELDUNG**

(21) Anmeldenummer: **93113398.7**

(22) Anmeldetag: **23.08.93**

(51) Int. Cl.[5]: **A01N 57/32**, A01N 57/24, A01N 57/16, C07F 9/6503

(30) Priorität: **03.09.92 DE 4229478**
**08.05.93 DE 4315384**

(43) Veröffentlichungstag der Anmeldung:
**23.03.94 Patentblatt 94/12**

(84) Benannte Vertragsstaaten:
**BE CH DE ES FR GB IT LI NL**

(71) Anmelder: **BAYER AG**

**D-51368 Leverkusen(DE)**

(72) Erfinder: **Fest, Christa Dr.**
**Im Johannistal 20**
**D-42119 Wuppertal(DE)**
Erfinder: **Riebel, Hans-Jochem Dr.**
**In der Beek 92**
**D-42113 Wuppertal(DE)**
Erfinder: **Santel, Hans-Joachim**
**Grünstrasse 9a**
**D-51371 Leverkusen(DE)**
Erfinder: **Lürssen, Klaus Dr.**
**August-Kierspel-Strasse 145**
**D-51469 Bergisch(DE)**
Erfinder: **Schmidt, Robert R.**
**Im Waldwinkel 110**
**D-51467 Berisch Gladbach(DE)**
Erfinder: **Erdelen, Christoph Dr.**
**Unterbüscherhof 22**
**D-42799 Leichlingen(DE)**
Erfinder: **Hartwig, Jürgen Dr.**
**Am kloster 39**
**D-42799 Leichlingen(DE)**
Erfinder: **Turberg, Andreas Dr.**
**Naheweg 19**
**D-40699 Erkrath(DE)**

(54) **Phosphoryloxypyrazolderivate.**

(57) Die vorliegende Erfindung betrifft die Verwendung von neuen und bekannten Phosphoryloxypyrazolderivaten der allgemeinen Formel (I)

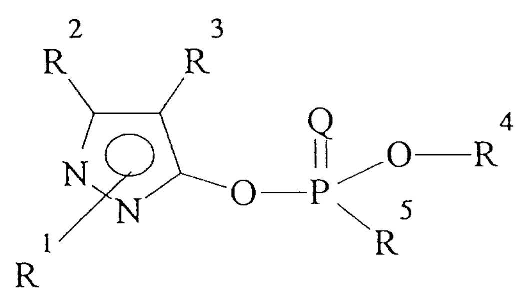

(I)

in welcher

| | |
|---|---|
| Q | für Sauerstoff oder Schwefel steht, |
| $R^1$ | für jeweils gegebenenfalls substituiertes Alkyl oder Aryl steht, |
| $R^2$ und $R^3$ | gleich oder verschieden sind und unabhängig voneinander für Wasserstoff, Cyano, Nitro, Carbamoyl, Carboxy, Halogen oder für jeweils gegebenenfalls substituiertes Alkyl, Alkoxy, Alkylthio, Alkylsulfinyl, Alkylsulfonyl, Alkoxycarbonyl, Alkylaminocarbonyl, Dialkylaminocarbonyl oder Aryl stehen, |
| $R^4$ | für Alkyl steht und |

EP 0 588 105 A1

$R^5$ für Alkylthio, Alkylamino, Aralkylamino oder Dialkylamino steht,
als Herbizide, sowie neue Stoffe der Formel (IA1)

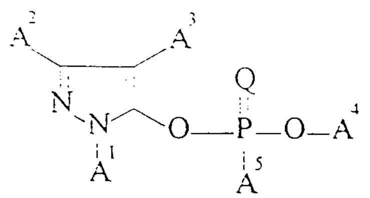

(IA1)

in welcher Q, $A^1$, $A^2$, $A^3$, $A^4$ und $A^5$ die in der Beschreibung angegebenen Bedeutungen haben und deren Verwendung als Schädlingsbekämpfungsmittel.

Die vorliegende Erfindung betrifft neue Phosphoryloxypyrazolderivate und ihre Verwendung als Schädlingsbekämpfungsmittel sowie die Verwendung von neuen und bekannten Phosphoryloxypyrazolderivaten als Herbizide.

Phosphoryloxypyrazolderivate sind bereits durch eine Reihe von Patentanmeldungen als Insektizide bekannt (vergleiche DE-OS 19 42 561 ≙ CA 074/142065, DE-OS 21 32 938 ≙ CA 078/124584, DE-OS 22 19 484 ≙ CA 080/27102, DE-OS 26 08 643 ≙ CA 088/6877, DE-OS 26 39 258 ≙ CA 089/43765, DE-OS 29 376 15 ≙ CA 093/46665, DE-OS 26 43 564 ≙ CA 089/43777, CA 089/59955, DE-OS 28 55 256 ≙ CA 091/193305, US-P 48 22 779).

Über eine Verwendung dieser Verbindungen als Herbizide ist jedoch bisher nichts bekannt geworden.

Es wurde nun gefunden, daß die Phosphoryloxypyrazolderivate der allgemeinen Formel (I)

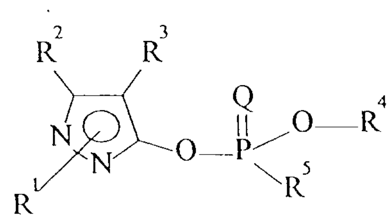

(I)

in welcher

| | |
|---|---|
| Q | für Sauerstoff oder Schwefel steht, |
| $R^1$ | für jeweils gegebenenfalls substituiertes Alkyl oder Aryl steht, |
| $R^2$ und $R^3$ | gleich oder verschieden sind und unabhängig voneinander für Wasserstoff, Cyano, Nitro, Carbamoyl, Carboxy, Halogen oder für jeweils gegebenenfalls substituiertes Alkyl, Alkoxy, Alkylthio, Alkylsulfinyl, Alkylsulfonyl, Alkoxycarbonyl, Alkylaminocarbonyl, Dialkylaminocarbonyl oder Aryl stehen, |
| $R^4$ | für Alkyl steht und |
| $R^5$ | für Alkylthio, Alkylamino, Aralkylamino oder Dialkylamino steht, starke Wirksamkeit gegen Unkräuter aufweisen. |

Die allgemeine Formel (I) steht für die isomeren Verbindungen der Formel (IA) und der Formel (IB).

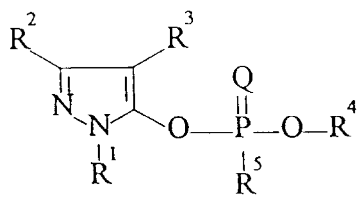

(IA)

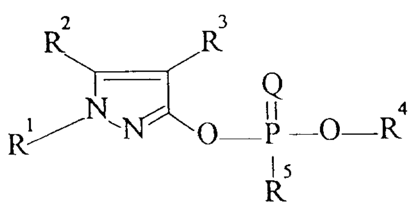

(IB)

Die erfindungsgemäß zu verwendenden Phosphoryloxypyrazolderivate sind durch die Formel (I) allgemein definiert. Vorzugsweise werden erfindungsgemäß diejenigen Verbindungen der Formel (I) verwendet, in welcher

| | |
|---|---|
| Q | für Sauerstoff oder Schwefel steht, |
| $R^1$ | Für gegebenenfalls durch Fluor, Chlor oder Cyano substituiertes $C_1$-$C_6$(-Alkyl oder für gegebenenfalls durch Fluor, Chlor, Brom, Cyano, $C_1$-$C_4$-Alkyl oder $C_1$-$C_4$-Alkoxy substituiertes Phenyl steht, |
| $R^2$ und $R^3$ | gleich oder verschieden sind und unabhängig voneinander für Wasserstoff, Cyano, Nitro, |

Carbamoyl, Carboxy, Fluor, Chlor, Brom, Iod oder für jeweils gegebenenfalls durch Fluor, Chlor, Cyano, $C_1$-$C_4$-Alkoxy oder $C_1$-$C_4$-Alkoxy-carbonyl substituiertes $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Alkoxycarbonyl, $C_1$-$C_6$-Alkylaminocarbonyl, Di-($C_1$-$C_4$-alkyl)-aminocarbonyl oder Phenyl stehen,

$R^4$ für $C_1$-$C_6$-Alkyl steht und

$R^5$ für $C_1$-$C_6$-Alkylthio, $C_1$-$C_6$-Alkylamino, Benzylamino oder Di-($C_1$-$C_4$-alkyl)-amino steht.

Die in der Definition der Verbindungen der Formel (I) genannten Alkylreste sind - auch in Verbindung mit Heteroatomen wie in Alkoxy, Alkylthio oder Alkylamino - jeweils geradkettig oder verzweigt.

Insbesondere werden erfindungsgemäß diejenigen Verbindungen der Formel (I) verwendet, in welcher

Q für Sauerstoff oder Schwefel steht,

$R^1$ für Methyl, Ethyl, n- oder i-Propyl, n-, i-, s- oder t-Butyl, Cyanoethyl, Cyanopropyl, Cyanobutyl, Phenyl, Fluorphenyl, Chlorphenyl, Bromphenyl, Methylphenyl oder Methoxyphenyl steht,

$R^2$ für Wasserstoff Cyano, Nitro, Carbamoyl, Fluor, Chlor, Brom, Iod, Methyl, Ethyl, n- oder i-Propyl, n-, i-, s- oder t-Butyl, Trifluormethyl, Methoxy, Ethoxy, n- oder i-Propoxy, n-, i-, s- oder t-Butoxy, Methylthio, Ethylthio, n-oder i-Propylthio, n-, i-, s- oder t-Butylthio, Methylsulfinyl, Ethylsulfinyl, n- oder i-Propylsulfinyl, n-, i-, s- oder t-Butylsulfinyl, Methylsulfonyl, Ethylsulfonyl, n- oder i-Propylsulfonyl, n-, i-, s- oder t-Butylsulfonyl, Methoxycarbonyl. Ethoxycarbonyl, n- oder i- Propoxycarbonyl, n-, i-, oder s-Butoxycarbonyl, Methylaminocarbonyl, Ethylaminocarbonyl, n- oder i-Propylaminocarbonyl, n-, i- oder s- Butylaminocarbonyl, Dimethylaminocarbonyl, Diethylaminocarbonyl oder Phenyl steht,

$R^3$ für Wasserstoff, Cyano, Nitro, Carbamoyl, Carboxy, Fluor, Chlor, Brom, Iod, Methyl, Ethyl, Trifluormethyl, Methoxy, Ethoxy, Methylthio, Ethylthio, Methylsulfinyl, Ethylsulfinyl, Methylsulfonyl, Ethylsulfonyl, Methoxycarbonyl, Ethoxycarbonyl, Difluormethoxy, Trifluormethoxy, Difluormethylthio, Trifluormethylthio, Difluormethylsulfinyl, Trifluormethylsulfinyl, Difluormethylsulfonyl oder Trimethylsulfonyl steht,

$R^4$ für Methyl, Ethyl, n- oder i-Propyl, n-, i-, s- oder t-Butyl steht und

$R^5$ für Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino steht.

Die erfindungsgemäß zu verwendenden Phosphoryloxypyrazolderivate der Formel (I) sind bekannt und/oder können nach an sich bekannten Verfahren hergestellt werden (vgl. DE-OS 19 42 561, DE-OS 21 32 938, DE-OS 22 19 484, DE-OS 26 08 643, DE-OS 26 39 258, DE-OS 29 37 615, DE-OS 26 43 564, DE-OS 28 55 256, US-P 48 22 779).

Man erhält die Verbindungen der Formel (I) beispielsweise, wenn man Hydroxypyrazole der allgemeinen Formel (II)

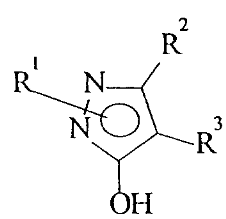

(II)

in welcher

$R^1$, $R^2$ und $R^3$ die oben angegebene Bedeutung haben,

mit Phosphorylierungsmitteln der allgemeinen Formel (III)

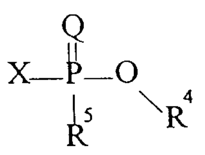

(III)

in welcher

Q, $R^4$ und $R^5$ die oben angegebenen Bedeutungen haben und

X für Halogen, vorzugsweise für Chlor steht,

in Gegenwart eines Säureakzeptors, wie z. B. Kaliumcarbonat, und in Gegenwart eines Verdünnungsmittels, wie z. B. Acetonitril bei Temperaturen mischen 0 °C und 100 °C umsetzt und auf übliche Weise aufarbeitet (vergleiche die Herstellungsbeispiele).

Noch nicht aus der Literatur bekannt und als neue Stoffe Gegenstand der vorliegenden Anmeldung sind die Verbindungen der Formel (IA1)

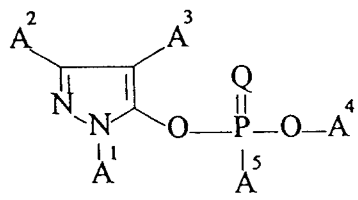

(IA1)

in welcher

- Q für Sauerstoff oder Schwefel steht,
- $A^1$ für gegebenenfalls durch Fluor, Chlor oder Cyano substituiertes $C_1$-$C_6$-Alkyl oder für gegebenenfalls durch Fluor, Chlor, Brom, Cyano, $C_1$-$C_4$-Alkyl oder $C_1$-$C_4$-Alkoxy substituiertes Phenyl steht,
- $A^2$ für durch Fluor, Chlor, Brom oder Iod substituiertes $C_1$-$C_6$-Alkyl steht,
- $A^3$ für Wasserstoff, Cyano, Nitro, Carbamoyl, Carboxy, Fluor, Chlor, Brom, Iod oder für jeweils gegebenenfalls durch Fluor, Chlor, Cyano, $C_1$-$C_4$-Alkoxy oder $C_1$-$C_4$-Alkoxy-carbonyl substituiertes $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Alkoxycarbonyl, $C_1$-$C_6$-Alkylaminocarbonyl, Di-($C_1$-$C_4$-alkyl)-aminocarbonyl oder Phenyl steht,
- $A^4$ für $C_1$-$C_6$-Alkyl steht und
- $A^5$ für $C_1$-$C_6$-Alkylthio, $C_1$-$C_6$-Alkylamino oder Di-($C_1$-$C_4$-alkyl)-amino steht.

Bevorzugt werden die neuen Verbindungen der Formel (IA1), in welcher

- Q für Sauerstoff oder Schwefel steht,
- $A^1$ für Methyl, Ethyl, n- oder i-Propyl, n-, i-, s- oder t-Butyl, Cyanoethyl, Cyanopropyl, Cyanobutyl, Phenyl, Fluorphenyl, Chlorphenyl, Bromphenyl, Methylphenyl oder Methoxyphenyl steht,
- $A^2$ für Fluormethyl, Chlormethyl, Difluormethyl, Dichlormethyl, Trifluormethyl, Trichlormethyl, Fluordichlormethyl, Chlordifluormethyl, Fluorethyl, Chlorethyl, Difluorethyl, Dichlorethyl, Trifluorethyl, Trichlorethyl, Fluordichlorethyl, Chlordifluorethyl, Tetrafluorethyl, Fluorpropyl, Chlorpropyl, Difluorpropyl, Dichlorpropyl, Trifluorpropyl, Trichlorpropyl, Fluordichlorpropyl, Chlordifluorpropyl, Tetrafluorpropyl, Pentafluorpropyl, Hexafluorpropyl, Fluorbutyl, Chlorbutyl, Difluorbutyl oder Trifluorbutyl steht (wobei die halogenierten Propyl- oder Butylreste jeweils geradkettig oder verzweigt sind),
- $A^3$ für Wasserstoff, Cyano, Nitro, Carbamoyl, Carboxy, Fluor, Chlor, Brom, Iod, Methyl, Ethyl, Trifluormethyl, Methoxy, Ethoxy, Methylthio, Ethylthio, Methylsulfinyl, Ethylsulfinyl, Methylsulfonyl, Ethylsulfonyl, Methoxycarbonyl, Ethoxycarbonyl, Difluormethoxy, Trifluormethoxy, Difluormethylthio, Trifluormethylthio, Difluormethylsulfinyl, Trifluormethylsulfinyl, Difluormethylsulfonyl oder Trifluormethylsulfonyl steht,
- $A^4$ für Methyl, Ethyl, n- oder i-Propyl, n-, i-, s- oder t-Butyl steht und
- $A^5$ für Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino steht.

Die neuen Phosphoryloxypyrazolderivate der Formel (IA1) können wie oben beschrieben hergestellt werden (vgl. die Herstellungsbeispiele).

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewandten Menge ab.

Die erfindungsgemäßen Wirkstoffe können z. B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Larnium, Veronica, Abutilon, Emex, Datura, Viola, Galeopsis, Papaver, Centaurea, Trifolium, Ranunculus, Taraxacum.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration Zur Totalunkrautbekämpfung z. B. auf Industrie- und Gleisanlagen und auf Wegen und Plätzen mit und ohne Baumbewuchs. Ebenso können die Verbindungen zur Unkrautbekämpfung in Dauerkulturen, z. B. Forst, Ziergehölz-, Obst-, Wein-, Citrus-, Nuß-, Bananen-, Kaffee-, Tee-, Gummi-, Ölpalm-, Kakao-, Beerenfrucht- und Hopfenanlagen, auf Zier- und Sportrasen und Weideflächen und zur selektiven Unkrautbekämpfung in einjährigen Kulturen eingesetzt werden.

Die Verbindungen der Formel (I) eignen sich insbesondere zur selektiven Bekämpfung von monokotylen und dikotylen Unkräutern in monokotylen Kulturen.

Die Verbindungen der Formel (I) - insbesondere der Formel (IA1) - zeigen auch starke Wirkung gegen tierische Schädlinge, insbesondere gegen Insekten und Nematoden.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z B. durch Vermischen der Wirkstoffe mit Streckmitteln, also flüssigen Lösungsmitteln und/oder festen Tragerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylfomamid und Dimethylsulfoxid, sowie Wasser.

Als feste Trägerstoffe kommen in Frage:

z. B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z. B. nichtionogene und anionische Emulgatoren, wie Polyoxyethylen-Fettsäure-Ester, Polyoxyethylen-Fettalkohol-Ether, z. B. Alkylaryl-polyglykolether, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden Zur Unkrautbekämpfung Verwendung finden, wobei Fertigformulierungen oder Tankmischungen möglich sind.

Für die Mischungen kommen bekannte Herbizide in Frage, beispielsweise Anilide, wie z.B. Diflufenican und Propanil; Arylcarbonsäuren, wie z.B. Dichlorpicolinsäure, Dicamba und Picloram; Aryloxyalkansäuren,

wie z.B. 2,4-D, 2,4-DB, 2,4-DP, Fluroxypyr, MCPA, MCPP, und Triclopyr; Aryloxy-phenoxy-alkansäureester, wie z. B. Diclofop-methyl, Fenoxaprop-ethyl, Fluazifop-butyl, Haloxyfop-methyl und Quizalofop-ethyl; Azinone, wie z.B. Chloridazon und Norflurazon; Carbamate, wie z. B. Chlorpropham, Desmedipham, Phenmedipham und Propham; Chloracetanilide, wie z.B. Alachlor, Acetochlor, Butachlor, Metazachlor, Metolachlor, Pretilachlor und Propachlor; Dinitroaniline, wie z.B. Oryzalin, Pendimethalin und Trifluralin; Diphenylether, wie z.B. Acifluorfen, Bifenox, Fluoroglycofen, Fomesafen, Halosafen, Lactofen und Oxyfluorfen; Harnstoffe, wie z.B. Chlortoluron, Diuron, Fluometuron, Isoproturon, Linuron und Methabenzthiazuron; Hydroxylamine, wie z.B. Alloxydim, Clethodim, Cycloxydim, Sethoxydim und Tralkoxydim; Imidazolinone, wie z.B. Imazethapyr, Imazamethabenz, Imazapyr und Imazaquin; Nitrile, wie z.B. Bomoxynil, Dichlobenil und Ioxynil; Oxyacetamide, wie z.B. Mefenacet; Sulfonylharnstoffe, wie z.B. Amidosulfuron, Bensulfuron-methyl, Chlorimuron-ethyl, Chlorsulfuron, Cinosulfuron, Metsulfuron-methyl, Nicosulfuron, Primisulfuron, Pyrazosulfuron-ethyl, Thifensulfuron-methyl, Triasulfuron und Tribenuron-methyl; Thiolcarbamate, wie z. B. Butylate, Cycloate, Diallate, EPTC, Esprocarb, Molinate, Prosulfocarb, Thiobencarb und Triallate; Triazine, wie z.B. Atrazin, Cyanazin, Simazin, Simetryne, Terbutryne und Terbutylazin; Triazinone, wie z.B. Hexazinon, Metamitron und Metribuzin; Sonstige, wie z.B. Aminotriazol, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Quinchlorac, Quinmerac, Sulphosate und Tridiphane.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z. B. durch Gießen, Spritzen, Sprühen, Streuen.

Die erfindungsgemäßen Wirkstoffe können sowohl vor, als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 10 g und 10 kg Wirkstoff pro Hektar Bodenfläche, vorzugsweise zwischen 50 g und 5 kg pro ha.

Die Wirkstoffe eignen sich bei günstiger Warmblütertoxizität auch zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec..

Aus der Ordnung der Symphyla z.B. Scutigerella immaculata.

Aus der Ordnung der Thysanura z.B. Lepisma saccharina.

Aus der Ordnung der Collembola z. B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Dainalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp..

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerim, Hyalopterus arundinis, Macrosiphum avenae, Myzuis spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..

Aus der Ordnung der Lepidoptera z.B. Pectinophora gossypiella, Bupalus piniarius, Cheimatobia brumata,

Lithocolletis blancardella, Hyponomeuta padella, Plutella maculipennis, Malacosoma neustria, Euproctis chrysorrhoea, Lymantria spp.. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp..

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp` , Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Wirkstoffe eine wirtschaftlichere und einfachere Tierhaltung möglich ist.

Die Anwendung der erfindungsgemäßen Wirkstoffe geschieht im Veterinärsektor in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßbändern, Halftern, Markierungsvorrichtungen usw.

Anwendungsbeispiele:

Beispiel A

Pre-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)

100 % = totale Vernichtung

In diesem Test zeigt beispielsweise die Verbindung gemäß Herstellungsbeispiel 1 bei guter Verträglichkeit gegenüber Kulturpflanzen, wie z. B. Weizen und Mais, starke Wirkung gegen Unkräuter.

Beispiel B

Phaedon-Larven-Test

| | |
|---|---|
| Lösungsmittel: | 7 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsanteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100 %, daß alle Käfer-Larven abgetötet wurden; 0 % bedeutet, daß keine Käfer-Larve abgetötet wurde.

Bei diesem Test zeigen z.B. die Verbindungen gemäß den Herstellungsbeispielen 1, 4, 8, 10 und 15 eine 100 %ige Abtötung der Testtiere bei einer Wirkstoffkonzentration von 0,1 %.

Beispiel C

Plutella-Test

| | |
|---|---|
| Lösungsmittel: | 7 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupe abgetötet wurde.

Bei diesem Test zeigen z.B. die Verbindungen gemäß den Herstellungsbeispielen 1, 6, 8, 10 und 15 eine 100%ige Abtötung der Testtiere bei einer Wirkstoffkonzentration von 0,1 %.

Beispiel D

Myzus-Test

| | |
|---|---|
| Lösungsmittel: | 7 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattlaus abgetötet wurde.

Bei diesem Test zeigen z.B. die Verbindungen gemäß den Herstellungsbeispielen 1, 2, 3, 4, 5, 12 und 18 bei einer Wirkstoffkonzentration von 0,1 % eine 100 %ige Abtötung der Testtiere.

Beispiel E

Nephotettix - Test

Lösungsmittel: 7 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Reiskeimlinge (Oryza sativa) werden durch Tauchen in die Wirkstoffzubereitung der gewünschten Konzentration behandelt und mit Larven der Grünen Reiszikade (Nephotettix cincticeps) besetzt, solange die Keimlinge noch feucht sind.

Nach der gewünschten Zeit wird die Abtötung in % bestimmt. Dabei bedeutet 100%, daß alle Zikaden abgetötet wurden; 0 % bedeutet, daß keine Zikade abgetötet wurde.

Bei diesem Test zeigen z.B. die Verbindungen gemäß den Herstellungsbeispielen 1, 2, 4, 5, 13 und 16 bei einer Wirkstoffkonzentration von 0,1 % eine 100 %ige Abtötung der Testtiere.

Beispiel F

Grenzkonzentrations-Test / Wurzelsystemische Wirkung

Testinsekt: Aphis fabae
Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit vorgekeimten Bohnen (Vicia faba). Der Wirkstoff kann so von den Pflanzenwurzeln aus dem Boden aufgenommen und in die Blätter transportiert werden.

Für den Nachweis des wurzelsystemischen Effektes werden nach 7 Tagen die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigen z.B. die Verbindungen der Herstellungsbeispiele 4, 14, 16 und 20 bei einer Wirkstoffkonzentration von 20 ppm eine 100%ige Abtötung der Testtiere.

Beispiel G

Grenzkonzentrations-Test / Wurzelsystemische Wirkung

Testinsekt: Myzus persicae
Lösungsmittel: 4 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen die Blätter mit den oben genannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigt z.B. die Verbindung gemäß Herstellungsbeispiel 16 bei einer Wirkstoffkonzentration von 20 ppm eine 100%ige Abtötung der Testtiere.

Beispiel H

Grenzkonzentrations-Test / Bodeninsekten

| | |
|---|---|
| Testinsekt: | Diabrotica balteata - Larven im Boden |
| Lösungsmittel: | 4 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 0,5 l Töpfe und läßt diese bei 20 °C stehen.

Sofort nach dem Ansatz werden je Topf 5 vorgekeimte Maiskörner ausgelegt. Nach 1 Tag werden in den behandelten Boden die entsprechenden Testinsekten gesetzt. Nach weiteren 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet sind und 0 %, wenn noch genau so viele Testinsekten leben wie in der unbehandelten Kontrolle.

In diesem Test zeigen z.B. die Verbindungen der Herstellungsbeispiele 6 und 8 bei einer Wirkstoffkonzentration von 20 ppm eine 100%ige Abtötung der Testtiere.

Beispiel I

Grenzkonzentrations-Test/Nematoden

| | |
|---|---|
| Testnematode: | Meloidogyne incognita |
| Lösungsmittel: | 4 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm (= mg/l) angegeben wird. Man füllt den behandelten Boden in Töpfe, sät Salat ein und hält die Töpfe bei einer Gewächshaustemperatur von 27 ° C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

In diesem Test zeigen z. B. die Verbindungen der Herstellungsbeispiele 2, 3 und 4 überlegene Wirksamkeit gegenüber dem Stand der Technik.

Beispiel K

Test mit Lucilia cuprina resistent-Larven

| | |
|---|---|
| Emulgator: | 35 Gewichtsteile Ethylenglykolmonomethylether |
| | 35 Gewichtsteile Nonylphenolpolyglykolether |

Zur Herstellung einer zweckmäßigen Wirkstoffzubereitung vermischt man drei Gewichtsteile Wirkstoff mit sieben Gewichtsteilen des oben angegebenen Gemisches und verdünnnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei diesem Test zeigt z.B. die Verbindung gemäß Herstellungsbeispiel 10 starke Wirksamkeit.

Beispiel L

Heliothis virescens - Test

Lösungsmittel: 7 Gewichtsteile Dimethylformamid
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Sojatriebe (Glycine max) werden durch Tauchen in die Wirkstoffzubereitung der gewünschten Konzentration behandelt und mit der Tabakknospenraupe (Heliothis virescens) besetzt, solange die Blätter noch feucht sind.

Nach der gewünschten Zeit wird die Abtötung in % bestimmt. Dabei bedeutet 100%, daß alle Raupen abgetötet wurden; 0 % bedeutet, daß keine Raupe abgetötet wurde.

Bei diesem Test zeigen z.B. die Verbindungen der Herstellungsbeispiele 6 und 10 bei einer Wirkstoffkonzentration von 0,01% eine 100%ige Abtötung der Testtiere nach 7 Tagen.

Herstellungsbeispiele:

Beipiel 1

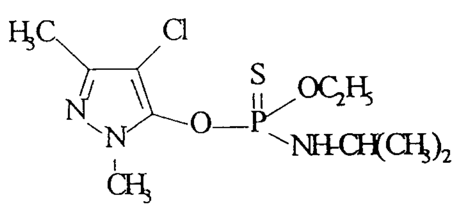

10,1 g (0,05 Mol) Thiophosphorsäure-chlorid-ethylester-isopropylamid werden bei 20 °C unter Rühren Zu einer Mischung aus 7,4 g (0,05 Mol) 1,3-Dimethyl-4-chlor-5-hydroxy-pyrazol, 8 g Kaliumcarbonat und 80 ml Acetonitril gegeben und das Reaktionsgemisch 15 Stunden bei 20 °C gerührt.

Zur Aufarbeitung wird dann mit Toluoi auf etwa das dreifache Volumen verdünnt, mit Wasser gewaschen, mit Natriumsulfat getrocknet und filtriert. Vom Filtrat werden dann die flüchtigen Komponenten im Wasserstrahlvakuum sorgfältig abdestilliert.

Man erhält 13,3 g (85 % der Theorie) Thiophosphorsäure-o-ethylester-isopropylamid- o-(1,3-dimethyl-4-chlor-5-pyrazoly(ester als amorphen Rückstand der allmählich kristallisiert. Schmelzpunkt: 63 °C.

Analog Zu Beispiel 1 können beispielsweise auch die in der nachstehenden Tabelle 1 aufgeführten Verbindungen der allgemeinen Formel (I) - bzw. der Formeln (IA) oder (IB) - hergestellt werden

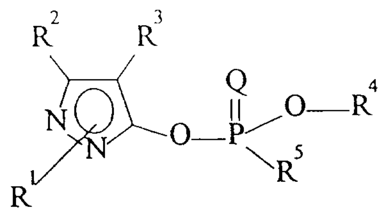

(I)

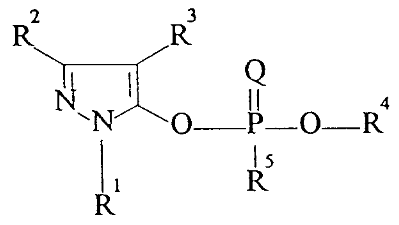

(IA)

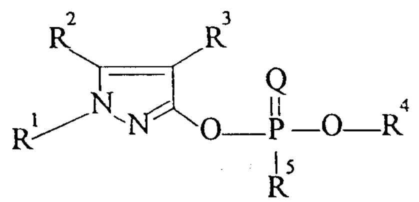

(IB)

Tabelle 1

| Bsp. Nr. | allg. For. | Q | $R^1$ | $R^2$ | $R^3$ | $R^4$ | $R^5$ | Phys. Daten |
|---|---|---|---|---|---|---|---|---|
| 2 | IB | S | $CH_3$ | $SCH_3$ | CN | $C_2H_5$ | $NHCH_3$ | Öl |
| 3 | IB | S | $CH_3$ | $SCH_3$ | CN | $C_2H_5$ | $NHC_3H_7i$ | Öl |
| 4 | IA | S | $CH_3$ | $CH_3$ | H | $C_2H_5$ | $NHCH_3$ | Öl |
| 5 | IA | S | $CH_3$ | $CH_3$ | H | $C_2H_5$ | $N(CH_3)_2$ | |
| 6 | IA | S | $CH_3$ | $CF_3$ | H | $C_2H_5$ | $NHCH_3$ | |
| 7 | IA | S | $CH_3$ | $CF_3$ | H | $C_2H_5$ | $N(CH_3)_2$ | |
| 8 | IA | S | $CH_3$ | $CF_3$ | H | $C_2H_5$ | $NHC_3H_7i$ | |
| 9 | IA | S | $CH_3$ | $CH_3$ | Cl | $C_2H_5$ | $NHCH_3$ | |
| 10 | IA | S | $CH_3$ | $CF_3$ | H | $C_2H_5$ | $NHC_4H_9s$ | |
| 11 | IA | S | $CH_3$ | $CH_3$ | Cl | $C_2H_5$ | $NHC_4H_9i$ | |
| 12 | IA | S | $CH_3$ | $CH_3$ | Cl | $C_2H_5$ | $NHC_3H_7n$ | |
| 13 | IA | S | $CH_3$ | $CH_3$ | H | $C_2H_5$ | $NHC_4H_9i$ | Öl |
| 14 | IA | S | $CH_3$ | $CH_3$ | H | $C_2H_5$ | $NHC_3H_7n$ | |
| 15 | IA | S | $CH_3$ | $CF_3$ | H | $C_2H_5$ | $NHC_3H_7n$ | |
| 16 | IA | S | $CH_3$ | $CH_3$ | H | $C_2H_5$ | $NHC_3H_7i$ | |
| 17 | IA | O | $CH_3$ | $CH_3$ | H | $C_2H_5$ | $NHC_3H_7i$ | |
| 18 | IA | O | $CH_3$ | $CH_3$ | Cl | $C_2H_5$ | $NHC_3H_7i$ | |
| 19 | IB | S | $CH_3$ | $SCH_3$ | CN | $C_2H_5$ | $N(CH_3)_2$ | |
| 20 | IB | S | $CH_3$ | H | $COOC_2H_5$ | $C_2H_5$ | $NHCH_3$ | |
| 21 | IB | S | $CH_3$ | H | $COOC_2H_5$ | $C_2H_5$ | $N(CH_3)_2$ | |

Tabelle 1 (Fortsetzung)

| Bsp. Nr | allg. For. | Q | $R^1$ | $R^2$ | $R^3$ | $R^4$ | $R^5$ | Phys. Daten |
|---|---|---|---|---|---|---|---|---|
| 22 | IB | S | $CH_3$ | H | $COOC_2H_5$ | $C_2H_5$ | $NHC_3H_7i$ | |
| 23 | IA | S | $CH_3$ | $CH_3$ | $NO_2$ | $C_2H_5$ | $NHC_3H_7i$ | |
| 24 | IA | S | $CH_3$ | $CH_3$ | $NO_2$ | $CH_3$ | $NHC_3H_7i$ | |
| 25 | IA | S | $CH_3$ | $CH_3$ | $NO_2$ | $C_2H_5$ | $NHC_2H_5$ | |
| 26 | IA | S | $CH_3$ | $CH_3$ | $NO_2$ | $C_2H_5$ | $NHCH_3$ | |
| 27 | IA | S | $CH_3$ | $CH_3$ | $NO_2$ | $C_2H_5$ | $N(CH_3)_2$ | |
| 28 | IA | S | $CH_3$ | $CH_3$ | Cl | $CH_3$ | $NHC_3H_7i$ | |
| 29 | IA | S | $CH_3$ | $CH_3$ | Cl | $C_2H_5$ | $NHC_2H_5$ | |
| 30 | IA | S | $CH_3$ | $CH_3$ | Cl | $C_2H_5$ | $NHCH_3$ | |
| 31 | IA | S | $CH_3$ | $CH_3$ | Cl | $C_2H_5$ | $N(C_2H_5)_2$ | |
| 32 | IA | S | $CH_3$ | $CH_3$ | Cl | $C_2H_5$ | $NHC_4H_9s$ | |
| 33 | IA | S | $CH_3$ | $CH_3$ | F | $C_2H_5$ | $NHC_3H_7i$ | |
| 34 | IA | S | $CH_3$ | $CH_3$ | F | $C_2H_5$ | $NHC_4H_9s$ | |
| 35 | IA | S | $CH_3$ | $CH_3$ | F | $C_2H_5$ | $NHC_2H_5$ | |
| 36 | IA | S | $CH_3$ | $CH_3$ | F | $C_2H_5$ | $N(CH_3)_2$ | |
| 37 | IA | S | $CH_3$ | $CH_3$ | F | $CH_3$ | $NHC_3H_7i$ | |
| 38 | IA | S | $CH_3$ | $CH_3$ | F | $CH_3$ | $NHC_4H_9s$ | Öl |
| 39 | IA | S | $CH_3$ | $CH_3$ | F | $nC_3H_7$ | $NHC_3H_7i$ | Öl |
| 40 | IA | S | $CH_3$ | $CH_3$ | Cl | $nC_3H_7$ | $NHC_3H_7i$ | Öl |
| 41 | IA | S | $CH_3$ | $CH_3$ | $NO_2$ | $nC_3H_7$ | $NHC_3H_7i$ | Öl |

Tabelle 1 (Fortsetzung)

| Bsp. Nr | allg. For. | Q | $R^1$ | $R^2$ | $R^3$ | $R^4$ | $R^5$ | Phys. Daten |
|---|---|---|---|---|---|---|---|---|
| 42 | IA | O | $CH_3$ | $CH_3$ | F | $C_2H_5$ | $NHC_3H_7i$ | Öl |
| 43 | IA | O | $CH_3$ | $CH_3$ | $NO_2$ | $C_2H_5$ | $NHC_2H_5$ | Öl |
| 44 | IA | O | $CH_3$ | $CH_3$ | Cl | $C_2H_5$ | $SC_3H_7n$ | Öl |
| 45 | IA | O | $CH_3$ | $CH_3$ | $NO_2$ | $C_2H_5$ | $SC_3H_7n$ | Öl |
| 46 | IA | O | $CH_3$ | $CH_3$ | F | $C_2H_5$ | $SC_3H_7n$ | Öl |
| 47 | IA | S | $CH_3$ | $CH_3$ | $CF_3$ | $C_2H_5$ | $NHC_3H_7i$ | Öl |
| 48 | IA | S | $CH_3$ | $CH_3$ | $CF_3$ | $nC_3H_7$ | $NHC_2H_5$ | Öl |
| 49 | IA | S | $CH_3$ | $CH_3$ | $OCF_3$ | $C_2H_5$ | $NHC_4H_9s$ | Öl |
| 50 | IA | O | $CH_3$ | $CH_3$ | $OCF_3$ | $C_2H_5$ | $SC_3H_7n$ | Öl |
| 51 | IA | S | $CH_3$ | $CH_3$ | $SCH_3$ | $C_2H_5$ | $NHC_3H_7i$ | Öl |
| 52 | IA | S | $CH_3$ | $CH_3$ | $SOCH_3$ | $C_2H_5$ | $NHC_2H_5$ | Fp.: 47°C |
| 53 | IA | S | $CH_3$ | $CH_3$ | $SO_2CH_3$ | $nC_3H_7$ | $NHCH_3$ | $n_D^{20}$ = 1.5179 |
| 54 | IA | S | $CH_3$ | $CH_3$ | CN | $C_2H_5$ | $NHC_3H_7i$ | $n_D^{20}$ = 1.5179 |
| 55 | IA | S | $CH_3$ | $CH_3$ | CN | $C_2H_5$ | $NHC_2H_5$ | Öl |
| 56 | IA | S | $CH_3$ | $CH_3$ | CN | $CH_3$ | $NHC_3H_7i$ | Öl |
| 57 | IA | S | $CH_3$ | H | Cl | $C_2H_5$ | $NHC_3H_7i$ | Fp.: 60°C |

Tabelle 1 (Fortsetzung)

| Bsp. Nr | allg. For. | Q | $R^1$ | $R^2$ | $R^3$ | $R^4$ | $R^5$ | Phys. Daten |
|---|---|---|---|---|---|---|---|---|
| 58 | IA | S | $CH_3$ | H | F | $C_2H_5$ | $NHC_3H_7i$ | Fp.: 64°C |
| 59 | IA | S | $CH_3$ | H | $NO_2$ | $C_2H_5$ | $NHC_3H_7i$ | |
| 60 | IA | S | $CH_3$ | H | $CF_3$ | $C_2H_5$ | $NHC_3H_7i$ | |
| 61 | IA | S | $CH_3$ | H | $NO_2$ | $C_2H_5$ | $NHC_2H_5$ | |
| 62 | IA | S | $CH_3$ | H | CN | $CH_3$ | $NHC_4H_9s$ | |
| 63 | IA | S | $CH_3$ | H | $SOCH_3$ | $C_2H_5$ | $NHC_3H_7i$ | |
| 64 | IA | S | $CH_3$ | H | $SO_2CH_3$ | $C_2H_5$ | $NHC_3H_7i$ | |
| 65 | IA | S | $CH_3$ | H | $SCH_3$ | $C_2H_5$ | $NHC_2H_5$ | |
| 66 | IA | S | $CH_3$ | H | Br | $CH_3$ | $NHC_3H_7i$ | |
| 67 | IA | S | $CH_3$ | $C_2H_5$ | Cl | $C_2H_5$ | $NHC_3H_7i$ | |
| 68 | IA | S | $CH_3$ | $C_2H_5$ | F | $C_2H_5$ | $NHC_3H_7i$ | |
| 69 | IA | S | $CH_3$ | $C_2H_5$ | $NO_2$ | $C_2H_5$ | $NHC_3H_7i$ | |
| 70 | IA | S | $CH_3$ | $C_2H_5$ | $CF_3$ | $C_2H_5$ | $NHC_3H_7i$ | |
| 71 | IA | S | $CH_3$ | $C_2H_5$ | $SOCH_3$ | $CH_3$ | $NHC_3H_7i$ | |
| 72 | IA | S | $CH_3$ | $C_2H_5$ | CN | $C_2H_5$ | $NHC_3H_7i$ | |
| 73 | IA | S | $CH_3$ | $C_2H_5$ | Br | $C_2H_5$ | $NHC_3H_7i$ | |
| 74 | IA | S | $CH_3$ | $CH(CH_3)_2$ | Cl | $CH_3$ | $NHC_3H_7i$ | |
| 75 | IA | S | $CH_3$ | $C(CH_3)_3$ | Cl | $C_2H_5$ | $NHC_4H_9s$ | |

Tabelle 1 (Fortsetzung)

| Bsp. Nr | allg. For. | Q | $R^1$ | $R^2$ | $R^3$ | $R^4$ | $R^5$ | Phys. Daten |
|---|---|---|---|---|---|---|---|---|
| 76 | IA | S | $CH_3$ | $CH—C_2H_5$<br>$CH_3$ | Cl | $C_2H_5$ | $NHC_4H_9s$ | |
| 77 | IA | S | $C_2H_5$ | $CH_3$ | Cl | $C_2H_5$ | $NHC_4H_9s$ | |
| 78 | IA | S | $C_2H_5$ | $CH_3$ | $CF_3$ | $C_2H_5$ | $NHC_4H_9s$ | |
| 79 | IA | S | $C_2H_5$ | $CH_3$ | $SO_2CH_3$ | $C_2H_5$ | $NHC_3H_7i$ | |
| 80 | IA | S | $C_2H_5$ | $CH_3$ | $NO_2$ | $C_2H_5$ | $NHC_3H_7i$ | |
| 81 | IA | S | $CH(CH_3)_2$ | $CH_3$ | Cl | $C_2H_5$ | $NHC_3H_7i$ | |
| 82 | IA | S | $CH(CH_3)_2$ | $C_2H_5$ | $NO_2$ | $C_2H_5$ | $NHC_3H_7i$ | |
| 83 | IA | S | $CH(CH_3)_2$ | $CH_3$ | $CF_3$ | $C_2H_5$ | $NHC_3H_7i$ | |
| 84 | IA | S | $CH(CH_3)_2$ | $nC_3H_7$ | $SO_2CH_3$ | $C_2H_5$ | $NHC_3H_7i$ | |
| 85 | IA | S | 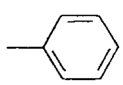 | $CH_3$ | Cl | $C_2H_5$ | $NHC_3H_7i$ | |
| 86 | IA | S | 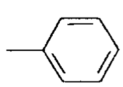 | H | $NO_2$ | $C_2H_5$ | $NHC_3H_7i$ | |
| 87 | IA | S | 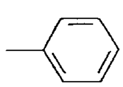 | $C_2H_5$ | CN | $C_2H_5$ | $NHC_3H_7i$ | |
| 88 | IA | S | 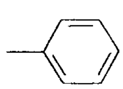 | $CH_3$ | Cl | $C_2H_5$ | $NHC_2H_5$ | |
| 89 | IA | S | $C_2H_5$ | 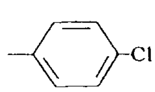 | Cl | $C_2H_5$ | $NHC_3H_7i$ | |
| 90 | IA | S | $CH(CH_3)_2$ | 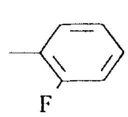 | F | $C_2H_5$ | $NHC_3H_7i$ | |

Tabelle 1 (Fortsetzung)

| Bsp. Nr | allg. For. | Q | $R^1$ | $R^2$ | $R^3$ | $R^4$ | $R^5$ | Phys. Daten |
|---|---|---|---|---|---|---|---|---|
| 91 | IA | S | $CH(CH_3)_2$ | 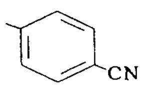 | $NO_2$ | $C_2H_5$ | $NHC_3H_7i$ | |
| 92 | IA | S | $CH_3$ | 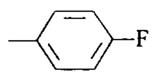 | CN | $C_2H_5$ | $NHC_3H_7i$ | |
| 93 | IA | S | $CH_3$ | 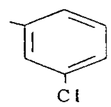 | $SO_2CH_3$ | $C_2H_5$ | $NHC_3H_7i$ | |
| 94 | IA | S | $CH_3$ | 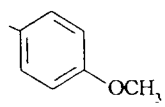 | $CF_3$ | $C_2H_5$ | $NHC_3H_7i$ | |
| 95 | IA | S | $CH_3$ | $CH_3$ | Br | $C_2H_5$ | $NHC_3H_7i$ | |
| 96 | IA | O | $CH_3$ | $CH_3$ | Br | $C_2H_5$ | $NHC_3H_7i$ | |
| 97 | IA | O | $CH_3$ | $CH_3$ | Br | $C_2H_5$ | $SC_3H_7n$ | |
| 98 | IA | S | $CH_3$ | $CH_3$ | Cl | $CH_3$ | $NHC_4H_9s$ | |
| 99 | IA | S | $CH_3$ | $CH_3$ | $NO_2$ | $C_2H_5$ | $NHC_3H_7i$ | |
| 100 | IA | S | $CH_3$ | $CH_3$ | CN | $CH_3$ | $NHC_3H_7i$ | |
| 101 | IA | S | $CH_3$ | $CH_3$ | $NO_2$ | $CH_3$ | $NHC_3H_7i$ | |
| 102 | IA | S | $C_6H_5$ | $CH_3$ | H | $C_2H_5$ | $NHC_3H_7i$ | Fp.: 83°C |
| 103 | IA | S | $C_6H_5$ | $CH_3$ | H | $C_2H_5$ | $NHCH_3$ | Öl |
| 104 | IB | S | $CH_3$ | $SCH_3$ | CN | $C_2H_5$ | $NHC_3H_7n$ | Öl |
| 105 | IB | S | $CH_3$ | $SCH_3$ | CN | $C_2H_5$ | $NHC_4H_9s$ | Öl |
| 106 | IA | S | $C_6H_5$ | $CH_3$ | H | $C_2H_5$ | $NHC_3H_7n$ | Öl |

Tabelle 1 (Fortsetzung)

| Bsp. Nr | allg. For. | Q | $R^1$ | $R^2$ | $R^3$ | $R^4$ | $R^5$ | Phys. Daten |
|---|---|---|---|---|---|---|---|---|
| 107 | IB | S | $CH_3$ | H | $COOC_2H_5$ | $C_2H_5$ | $NHC_3H_7n$ | Öl |
| 108 | IB | S | $CH_3$ | H | $COOC_2H_5$ | $C_2H_5$ | $NHC_4H_9s$ | Öl |
| 109 | IA | S | $C_6H_5$ | $CH_3$ | H | $C_2H_5$ | $NHC_4H_9s$ | Öl |
| 110 | IA | S | $C_6H_5$ | $CH_3$ | H | $C_2H_5$ | $N(CH_3)_2$ | Öl |
| 111 | IA | S | $CH_3$ | $CH_3$ | H | $CH_3$ | $NHC_3H_7n$ | Öl |
| 112 | IA | S | $CH_3$ | $CF_3$ | H | $CH_3$ | $NHC_3H_7n$ | Öl |
| 113 | IA | S | $C_6H_5$ | $CH_3$ | H | $CH_3$ | $NHC_3H_7n$ | Öl |
| 114 | IB | S | $CH_3$ | $SCH_3$ | CN | $CH_3$ | $NHC_3H_7n$ | Öl |
| 115 | IB | S | $CH_3$ | $SCH_3$ | CN | $CH_3$ | $NHC_3H_7i$ | Öl |
| 116 | IB | S | $CH_3$ | H | $COOC_2H_5$ | $CH_3$ | $NHC_3H_7n$ | Fp: 96°C |
| 117 | IB | S | $CH_3$ | H | $COOC_2H_5$ | $CH_3$ | $NHC_3H_7i$ | Fp: 77°C |
| 118 | IA | S | $C_6H_5$ | $CH_3$ | H | $CH_3$ | $NHC_3H_7i$ | Öl |
| 119 | IA | S | $CH_3$ | $CH_3$ | H | $CH_3$ | $NHC_3H_7i$ | Öl |
| 120 | IA | S | $CH_3$ | $CF_3$ | H | $CH_3$ | $NHC_3H_7i$ | Öl |
| 121 | IA | S | $CH_3$ | $CH_3$ | $CH_3$ | $C_2H_5$ | $NHC_3H_7i$ | Öl |
| 122 | IA | S | $CH_3$ | $CH_3$ | $CH_3$ | $C_2H_5$ | $NHC_3H_7n$ | Öl |
| 123 | IA | S | $CH_3$ | $CH_3$ | $CH_3$ | $C_2H_5$ | $NHCH_3$ | Öl |
| 124 | IA | S | $CH_3$ | $CH_3$ | $CH_3$ | $C_2H_5$ | $N(CH_3)_2$ | Öl |
| 125 | IA | S | $CH_3$ | $CH_3$ | $CH_3$ | $C_2H_5$ | $NHC_4H_9s$ | Öl |
| 126 | IA | S | $CH_3$ | $CH_3$ | $C_6H_5$ | $C_2H_5$ | $NHCH_3$ | Öl |

Tabelle 1 (Fortsetzung)

| Bsp. Nr | allg. For. | Q | $R^1$ | $R^2$ | $R^3$ | $R^4$ | $R^5$ | Phys. Daten |
|---|---|---|---|---|---|---|---|---|
| 127 | IA | S | $CH_3$ | $CH_3$ | $C_6H_5$ | $C_2H_5$ | $N(CH_3)_2$ | Fp: 123°C |
| 128 | IA | S | $CH_3$ | $CH_3$ | $C_6H_5$ | $C_2H_5$ | $NHC_3H_7i$ | Fp: 111°C |
| 129 | IA | S | $CH_3$ | $CH_3$ | $C_6H_5$ | $C_2H_5$ | $NHC_3H_7n$ | Öl |
| 130 | IA | S | $CH_3$ | $CH_3$ | $C_6H_5$ | $C_2H_5$ | $NHC_4H_9s$ | Fp: 80°C |
| 131 | IA | S | $CH_3$ | $CF_3$ | Cl | $C_2H_5$ | $N(CH_3)_2$ | Fp: 39°C |
| 132 | IA | S | $CH_3$ | $COOC_2H_5$ | H | $C_2H_5$ | $NHC_3H_7n$ | Fp: 67°C |
| 133 | IA | S | $CH_3$ | $CH_3$ | $SO_2CH_3$ | $C_2H_5$ | $NHC_3H_7i$ | Fp: 82°C |
| 134 | IA | S | $CH_3$ | $CF_3$ | Cl | $C_2H_5$ | $NHC_3H_7n$ | Öl |
| 135 | IA | S | $CH_3$ | $CF_3$ | Cl | $CH_3$ | $C_4H_9s$ | Öl |
| 136 | IA | S | $CH_3$ | $CH_3$ | H | $C_3H_7n$ | $NHC_3H_7n$ | Öl |
| 137 | IA | S | $CH_3$ | $CH_3$ | H | $C_2H_5$ | $NHC_4H_9n$ | Öl |
| 138 | IA | S | $CH_3$ | $CH_3$ | H | $C_2H_5$ | $NHCH_2C_6H_5$ | Öl |
| 139 | IA | S | $CH_3$ | $CF_3$ | H | $C_3H_7i$ | $NHC_3H_7n$ | Öl |
| 140 | IA | S | $CH_3$ | $CF_3$ | H | $C_2H_5$ | $NHCH_2C_6H_5$ | Öl |
| 141 | IA | S | $CH_3$ | $CH_3$ | Cl | $C_2H_5$ | $NHCH_2C_6H_5$ | Öl |
| 142 | IA | S | $CH_3$ | $CH_3$ | Cl | $C_3H_7i$ | $NHC_3H_7n$ | Öl |

Die in Tabelle 1 als Beispiel 10 aufgeführte Verbindung kann beispielsweise wie folgt hergestellt werden:

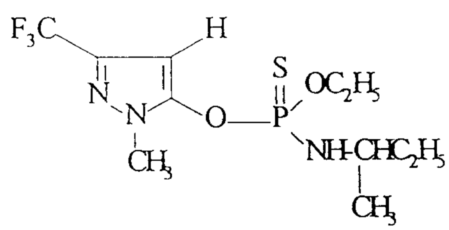

8,1 g (49 mMol) 5-Hydroxy-1-methyl-3-trifluormethyl-pyrazol werden in 100 ml Acetonitril gelöst und zu dieser Lösung werden 6,8 g (49 mMol) Kaliumcarbonat gegeben. 10,5 g (49 mMol) Thiophosphorsäure-chlorid-ethylester-sec-butylamidwerden dann bei 20 °C unter Rühren Zu dieser Mischung gegeben. Das Reaktionsgemisch wird dann 20 Stunden bei 20 °C und eine weitere Stunde bei 50 °C gerührt. Nach Abkühlen wird es zu 25 ml IN-Natronlauge, welche man vorher mit Wasser auf 500 ml verdünnt hat, gegeben und mit Methylenchlorid extrahiert. Die organische Phase wird mit Wasser gewaschen, mit Natriumsulfat getrocknet und filtriert. Vom Filtrat wird das Lösungsmittel im Wasserstrahlvakuum sorgfältig abdestilliert.

Man erhält 12,4g(73% der Theorie) Thiophosphorsäure-O-ethylester-sec-butylamid-(1-methyl-3-trifluormethyl-5-pyrazolylester) als gelben, öligen Rückstand.

**Patentansprüche**

**1.** Herbizide Mittel, gekennzeichnet durch einen Gehalt an mindestens einem Phosphoryloxypyrazolderivat der Formel (I)

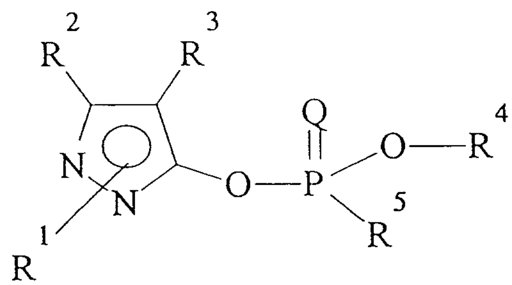

(I)

in welcher

Q für Sauerstoff oder Schwefel steht,

$R^1$ für jeweils gegebenenfalls substituiertes Alkyl oder Aryl steht,

$R^2$ und $R^3$ gleich oder verschieden sind und unabhängig voneinander für Wasserstoff, Cyano, Nitro, Carbamoyl, Carboxy, Halogen oder für jeweils gegebenenfalls substituiertes Alkyl, Alkoxy, Alkylthio, Alkylsulfinyl, Alkylsulfonyl, Alkoxycarbonyl, Alkylaminocarbonyl, Dialkylaminocarbonyl oder Aryl stehen,

$R^4$ für Alkyl steht und

$R^5$ für Alkylthio, Alkylamino, Aralkylamino oder Dialkylamino steht.

**2.** Herbizide Mittel, gekennzeichnet durch einen Gehalt an mindestens einem Phosphoryloxypyrazolderivat der Formel (I) gemäß Anspruch 1, dadurch gekennzeichnet, daß

Q für Sauerstoff oder Schwefel steht,

$R^1$ für gegebenfalls durch Fluor, Chlor oder Cyano substituiertes $C_1$-$C_6$-Alkyl oder für gegebenenfalls durch Fluor, Chlor, Brom, Cyano, $C_1$-$C_4$-Alkyl oder $C_1$-$C_4$-Alkoxy substituiertes Phenyl steht,

$R^2$ und $R^3$ gleich oder verschieden sind und unabhängig voneinander für Wasserstoff, Cyano, Nitro, Carbam oyl, Carboxy, Fluor, Chlor, Brom, Iod oder für jeweils gegebenenfalls durch Fluor, Chlor, Cyano, $C_1$-$C_4$-Alkoxy oder $C_1$-$C_4$-Alkoxy-carbonyl substituiertes $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Alkoxycarbonyl, $C_1$-$C_6$Alkylaminocarbonyl, Di-($C_1$-$C_4$-alkyl)-aminocarbonyl oder Phenyl stehen,

$R^4$ für $C_1$-$C_6$-Alkyl steht und

$R^5$ für $C_1$-$C_6$-Alkylthio, $C_1$-$C_6$-Alkylamino, Benzylamino oder Di-($C_1$-$C_4$-alkyl)-amino steht.

**3.** Herbizide Mittel, gekennzeichnet durch einen Gehalt an mindestens einem Phosphoryloxypyrazolderivat der Formel (I) gemaß Anspruch 1, dadurch gekennzeichnet, daß

Q für Sauerstoff oder Schwefel steht,

$R^1$ für Methyl, Ethyl, n- oder i-Propyl, n-, i-, s- oder t-Butyl, Cyanoethyl, Cyanopropyl, Cyanobutyl, Phenyl, Fluorphenyl, Chlorphenyl, Bromphenyl, Methylphenyl oder Methoxyphenyl steht,

$R^2$ für Wasserstoff, Cyano, Nitro, Carbamoyl, Fluor, Chlor, Brom, Iod, Methyl, Ethyl, n- oder i-Propyl, n-, i-, s- oder t-Butyl, Trifluormethyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylsulfinyl, Ethylsulfinyl, n- oder i-Propylsulfinyl, n-, i, s- oder t-Butylsulfinyl, Methylsulfonyl, Ethylsulfonyl, n- oder i-Propylsulfonyl, n-, i-, s- oder t-Butylsulfonyl, Methoxycarbonyl, Ethoxycarbonyl, n- oder i- Propoxycarbonyl, n-, i-, oder s-Butoxycarbonyl, Methylaminocarbonyl, Ethylaminocarbonyl, n- oder i- Propylaminocarbonyl, n-, i- oder s- Butylaminocarbonyl, Dimethylaminocarbonyl, Diethylaminocarbonyl oder Phenyl steht,

$R^3$ für Wasserstorf, Cyano, Nitro, Carbamoyl, Carboxy, Fluor, Chlor, Brom, Iod, Methyl, Ethyl, Trifluormethyl, Methoxy, Ethoxy, Methylthio, Ethylthio, Methylsulfinyl, Ethylsulfinyl, Methylsulfonyl, Ethylsulfonyl, Methoxycarbonyl, Ethoxycarbonyl, Difluormethoxy, Trifluormethoxy, Difluormethylthio, Trifluormethylthio, Difluormethylsulfinyl, Trifluormethylsulfinyl, Difluormethylsulfonyl oder Trimethylsulfonyl steht,

$R^4$ für Methyl, Ethyl, n- oder i-Propyl, n-, i-, s- oder t-Butyl steht und

$R^5$ für Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino steht.

4. Verfahren zur Bekämpfung von Unkräutern, dadurch gekennzeichnet, daß man Phosphoryloxypyrazolderivate der Formel (I) auf Unkräuter und/oder ihre Lebensräume einwirken läßt.

5. Verwendung von Phosphoryloxypyrazolderivaten gemäß Formel (I) zur Bekämpfung von Unkräutern.

6. Verfahren zur Herstellung von herbiziden Mitteln, dadurch gekennzeichnet, daß man Phosphoryloxypyrazolderivate der Formel (I) gemäß Anspruch 1 mit Streckmitteln und/oder oberflächenaktiven Substanzen vermischt.

7. Phosphoryloxypyrazolderivate der allgemeinen Formel (IA1)

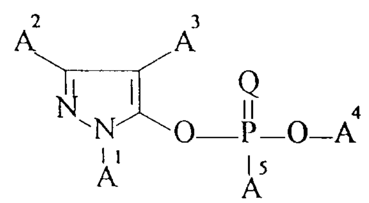

(IA1)

in welcher

Q für Sauerstoff oder Schwefel steht,

$A^1$ für gegebenenfalls durch Fluor, Chlor oder Cyano substituiertes $C_1$-$C_6$-Alkyl oder für gegebenenfalls durch Fluor, Chlor, Brom, Cyano, $C_1$-$C_4$-Alkyl oder $C_1$-$C_4$-Alkoxy substituiertes Phenyl steht,

$A^2$ für durch Fluor, Chlor, Brom oder Iod substituiertes $C_1$-$C_6$-Alkyl steht,

$A^3$ für Wasserstoff, Cyano, Nitro, Carbamoyl, Carboxy, Fluor, Chlor, Brom, Iod oder für jeweils gegebenenfalls durch Fluor, Chlor, Cyano, $C_1$-$C_4$-Alkoxy oder $C_1$-$C_4$-Alkoxy-carbonyl substituiertes $C_1$-$C_6$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_6$-Alkoxycarbonyl, $C_1$-$C_6$-Alkylaminocarbonyl, Di-($C_1$-$C_4$-alkyl)-aminocarbonyl oder Phenyl steht,

$A^4$ für $C_1$-$C_6$-Alkyl steht und

$A^5$ für $C_1$-$C_6$-Alkylthio, $C_1$-$C_6$-Alkylamino oder Di-($C_1$-$C_4$-alkyl)-amino steht.

8. Phosphoryloxypyrazolderivate der allgemeinen Formel (IA1) gemäß Anspruch 7, dadurch gekennzeichnet, daß

Q für Sauerstoff oder Schwefel steht,

$A^1$ für Methyl, Ethyl, n- oder i-Propyl, n-, i-, s- oder t-Butyl, Cyanoethyl, Cyanopropyl, Cyanobutyl, Phenyl, Fluorphenyl, Chlorphenyl, Bromphenyl, Methylphenyl oder Methoxyphenyl steht,

$A^2$ für Fluormethyl, Chlormethyl, Difluormethyl, Dichlormethyl, Trifluormethyl, Trichlormethyl, Fluordichlormethyl, Chlordifluormethyl, Fluorethyl, Chlorethyl, Difluorethyl, Dichlorethyl, Trifluorethyl, Trichlorethyl, Fluordichlorethyl, Chlordifluorethyl, Tetrafluorethyl, Fluorpropyl, Chlorpropyl, Difluorpropyl, Dichlorpropyl, Trifluorpropyl, Trichlorpropyl, Fluordichlorpropyl, Chlordifluorpropyl, Tetrafluorpropyl, Pentafluorpropyl, Hexafluorpropyl, Fluorbutyl, Chlorbutyl, Difluorbutyl oder Trifluorbutyl steht (wobei die halogenierten Propyl- oder Butylreste jeweils geradkettig oder verzweigt sind),

$A^3$ für Wasserstoff, Cyano, Nitro, Carbamoyl, Carboxy, Fluor, Chlor, Brom, Iod, Methyl, Ethyl, Trifluormethyl, Methoxy, Ethoxy, Methylthio, Ethylthio, Methylsulfinyl, Ethylsulfinyl, Methylsulfonyl, Ethylsulfonyl, Methoxycarbonyl, Ethoxycarbonyl, Difluormethoxy, Trifluormethoxy, Difluormethylthio, Trifluormethylthio, Difluormethylsulfinyl, Trifluormethylsulfinyl, Difluormethylsulfonyl oder Trifluormethylsulfonyl steht,

$A^4$ für Methyl, Ethyl, n- oder i-Propyl, n-, i-, s- oder t-Butyl steht und

$A^5$ für Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino steht.

**9.** Verfahren zur Bekämpfung von Insekten, dadurch gekennzeichnet, daß man Phosphoryloxypyrazol-Derivate der allgemeinen Formel (IA1) gemäß den Ansprüchen 7 und 8 auf Insekten und/oder ihren Lebensraum einwirken läßt.

**10.** Verwendung von Phosphoryloxypyrazol-Derivaten der allgemeinen Formel (IA1) gemäß den Ansprüchen 7 und 8 zur Bekämpfung von Insekten.

Europäisches Patentamt

# EUROPÄISCHER RECHERCHENBERICHT

Nummer der Anmeldung
EP 93 11 3398

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | US-A-3 010 969 (R.H.RIGTERINK ET AL)<br>* das ganze Dokument *<br>& DE-B-12 35 928 (THE DOW CHEMICAL)<br>* das ganze Dokument *<br>--- | 1-6 | A01N57/32<br>A01N57/24<br>A01N57/16<br>C07F9/6503 |
| X | US-A-4 822 779 (HWANG ET AL.)<br>* das ganze Dokument *<br>--- | 7-10 | |
| A | US-A-4 643 757 (M.BABA ET AL.)<br>* Spalte 1, Zeile 39 - Zeile 68 *<br>* Spalten 9-12; Tabelle 1, Verbindungen Nr. 13, 25 *<br>* Spalten 13-30; Tabelle 2, Verbindungen Nr. 36, 37, 64-66, 91-93, 117-119, 143-145, 169-171, 195-197, 220, 221, 245-247 *<br>--- | 1-10 | |
| A | FR-A-2 016 890 (FARBENFABRIK BAYER)<br>* Seite 1, Zeile 1 - Zeile 16 *<br>* Seite 1, Zeile 40 - Seite 2, Zeile 3 *<br>--- | 1-10 | **RECHERCHIERTE SACHGEBIETE (Int.Cl.5)** |
| A | CHEMICAL PATENTS INDEX, BASIC ABSTRACTS JOURNAL<br>Section Ch, Week 8827, 31. August 1988<br>Derwent Publications Ltd., London, GB;<br>Class C, AN 88-186145/27<br>& JP-A-63 122 673 (NISSAN CHEM IND) 26. Mai 1988<br>* Zusammenfassung *<br>--- | 1-10 | A01N<br>C07F |
| A | FR-A-2 412 557 (MONTEDISON)<br>* Seite 1, Zeile 1 - Zeile 4 *<br>* Seite 8-10; Tabelle II, Verbindungen Nr. 6, 8-10, 12, 22, 35, 40 * | 7-10 | |
| D | & DE-A-28 55 256 (...)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 13. Dezember 1993 | Lamers, W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument